# EUROPÄISCHE PATENTSCHRIFT

(11) **EP 2 477 828 B1**
(45) Veröffentlichungstag und Bekanntmachung des Hinweises auf die Patenterteilung: **06.11.2013**
(21) Anmeldenummer: 10754889.3
(22) Anmeldetag: 15.09.2010
(51) Int. Cl.: B60H 1/34

(54) **DRALLEINRICHTUNG FÜR EINEN LUFTAUSSTRÖMER**
SWIRL DEVICE FOR AN AIR OUTLET
DISPOSITIF GIRATOIRE POUR UN DIFFUSEUR D'AIR

(30) Priorität: 15.09.2009 DE 102009041532
(43) Veröffentlichungstag der Anmeldung: 25.07.2012
(73) Patentinhaber: TRW Automotive Electronics & Components GmbH, 78315 Radolfzell (DE)
(72) Erfinder: KOBER, Steve, 08233 Treuen (DE); MAHR, Ralf, 96264 Altenkunstadt (DE)
(74) Vertreter: Prinz & Partner
(86) Internationale Anmeldenummer: PCT/EP2010/005675
(87) Internationale Veröffentlichungsnummer: WO 2011/032694

(56) Entgegenhaltungen:
- EP-A1- 1 800 918
- EP-A1- 1 923 242
- DE-U1- 29 914 962
- FR-A1- 2 794 690

## Beschreibung

Die Erfindung betrifft eine Dralleinrichtung für einen Luftausströmer. Die Erfindung betrifft ferner einen Luftausströmer, insbesondere für die Belüftung bzw. Klimatisierung eines Fahrzeuginnenraumes, mit einer solchen Dralleinrichtung.

Luftausströmer sind in vielfältigen Ausführungen bekannt. Sie dienen im Allgemeinen dazu, den Volumenstrom und die Richtung des Luftstromes für die Belüftung bzw. Klimatisierung des Fahrzeuginnenraumes in geeigneter Weise einzustellen. Hierzu gibt es immer mehr die Forderung, den Luftstrom wahlweise in einer ersten Einstellung als direkten Luftstrom in den Innenraum bzw. direkt auf den Fahrzeuginsassen zu lenken als auch in einer anderen Einstellung als verwirbelten, mit einem Drall versehenen Luftstrom diffus auf den Fahrzeuginsassen bzw. in den Fahrzeuginnenraum zu lenken.

Aus der Gebäudeklimatechnik sind Drallluftauslässe bekannt. So gibt die EP 0 472 777 B1 einen Luftauslass mit Dralleinsatz an. Im Ausgang des Luftkanals befindet sich eine Nabe, die am auslassseitigen Ende ein Zahnradgetriebe trägt, das Luftschaufeln, die sich radial von der Nabe erstrecken, drehbar lagert. Dabei ist jedes der schaufelartigen Luftleitelemente mit einem Zahnrad bestückt, das mit einem entsprechenden Zahnrad im Getriebe am Nabenende zusammenwirkt. Hierüber kann der Neigungswinkel der Luftleitelemente und so die Stärke des Dralles der ausströmenden Luft, eingestellt werden. Nachteilig dabei ist, dass das Getriebe relativ stark den freien Querschnitt des Luftauslasses beschränkt, da durch die aufwändige Zahnradkonstruktion das Nabenende selbst einen relativ großen Durchmesser einnimmt. Hinzu kommt noch ein relativ großes Gewicht. Beides würde sich nachteilig für einen Einsatz in einem Kraftfahrzeug auswirken. Während in der Gebäudeklimatechnik Auslassdurchmesser von 20 cm und mehr typisch sind, bewegen sich die Durchmesser von Auslassöffnungen in Fahrzeugen im Bereich deutlich unter 10 cm. Die Montage solcher Verstellmechanismen ist zudem relativ aufwändig und damit teuer.

Die DE 299 14 962 U1 gibt einen Luftausströmer für Kraftfahrzeuge an der ebenfalls an einer zentralen Nabe verstellbare, radial nach außen verlaufende Luftleitschaufeln aufweist, die über ein zentrales Getriebe mit Zahnrädern bzw. Reibrädern um jeweils eine Schwenkachse verschwenkbar sind. Die Montage eines solchen mit Zahnradgetriebe bzw. mit Reibrädern versehenen Luftausströmers ist ebenfalls aufwändig und damit teuer.

Aus der FR 2 794 690 A1 ist ein Luftausströmer für ein Kraftfahrzeug mit einem an zwei gegenüberliegenden Seiten offenen Gehäuse und im Gehäuse angeordneten Flügeln bekannt, die eine senkrecht zur Gehäuseachse verlaufende Drehachse aufweisen. Die Flügel sind entweder auf deren inneren Seite oder auf deren äußerer Seite mit einer Verzahnung versehen und durch ein gezahntes Drehteil angetrieben, das entweder auf einer mittig im Gehäuse angeordneten Welle oder am Umfang des Gehäuses angeordnet ist.

Die vorliegende Erfindung stellt sich die Aufgabe, einen Luftausströmer bereitzustellen, der den austretenden Luftstrom wahlweise in einen einstellbaren Drall versetzt oder in direkter Strömung in den Fahrzeuginnenraum bzw. auf den Fahrzeuginsassen leiten kann. Die durchströmte Fläche soll dabei möglichst groß sein. Einfache, kostensparende Montage und Gewichtseinsparung sind weitere Forderungen.

Die Aufgabe wird erfindungsgemäß durch einen Luftausströmer mit den Merkmalen des Anspruches 1 gelöst. Die auf den Anspruch 1 rückbezogenen Unteransprüche geben weitere vorteilhafte Ausgestaltungsmerkmale der Erfindung an.

Die erfindungsgemäße Dralleinrichtung für einen Luftausströmer, insbesondere für die Belüftung bzw. Klimatisierung eines Fahrzeuginnenraumes, umfasst eine Nabe und eine Verstellachse. Die Dralleinrichtung umfasst ferner ein in der Nabe drehbar gelagertes und sich von der Nabe radial erstreckendes erstes Luftleitelement, das durch Drehen der Verstellachse verstellbar ist, sowie wenigstens ein in der Nabe drehbar gelagertes und sich von der Nabe radial erstreckendes zweites Luftleitelement. Das erste Luftleitelement weist an seinem der Nabe abgewandten Ende ein Zahnsegment auf, das in ein Zahnsegment eines um die Verstellachse drehbaren Zahnkranzes eingreift und mit diesem zusammenwirkt. Auch das zweite Luftleitelement weist an seinem der Nabe abgewandten Ende ein Zahnsegment auf, das ebenfalls in ein Zahnsegment des Zahnkranzes eingreift und mit diesem zusammenwirkt. Das erste Luftleitelement weist ein weiteres Zahnsegment auf, das in ein an die Verstellachse gekoppeltes Zahnsegment eingreift und mit diesem zusammenwirkt.

Durch das Zusammenwirken der Zahnsegmente der Luftleitelemente mit dem Zahnkranz wird die Drehbewegung des ersten Luftleitelements auf die zweiten Luftleitelemente übertragen und mit der Drehbewegung des ersten Luftleitelements synchronisiert. Hierdurch werden aufwändige Zahnrad- bzw. Reibradgetriebe in der Nabe, wie sie dem Stand der Technik entsprechen, erspart.

Die weiteren Vorteile der Erfindung liegen in der Verwendung weniger, einfacher und preiswerter Kunststoff-Spritzgussteile, die in einer einfachen Steckmontage zusammengefügt werden können. Die Erfindung stellt somit eine leichte, preiswerte und unter weitestgehender Vermeidung von Materialmix herstellbare Dralleinrichtung für einen Luftausströmer zur Verfügung, die durch einen weiten Verstellbereich von Luftleitelementen den Luftstrom zwischen direktem Strom (Spot) und stark drallbehaftetem Luftstrom (diffus), je nach Wunsch des Fahrzeuginsassen, einstellbar macht.

Ein Ausführungsbeispiel der Erfindung wird anhand der beigefügten Zeichnungen näher erläutert. In den Zeichnungen zeigen:
- Figur 1 eine perspektivische Darstellung eines Luftausströmers mit einer erfindungsgemäßen Dralleinrichtung;
- Figur 2 eine Frontalansicht des Luftausströmers;
- Figur 3 eine perspektivische Darstellung der Dralleinrichtung in Richtung des Luftstrom betrachtet;
- Figur 4 Antrieb und Synchronisation der Luftleitelemente der Dralleinrichtung in Seitenansicht ohne Gehäuse;
- Figur 5 eine Seitenansicht des Luftausströmers;
- Figur 6 eine geschnittene Seitenansicht des Luftausströmers;
- Figur 7 einen geschnittene Seitenansicht des Luftausströmers in einer gegenüber Figur 6 um 90° versetzten Ebene.

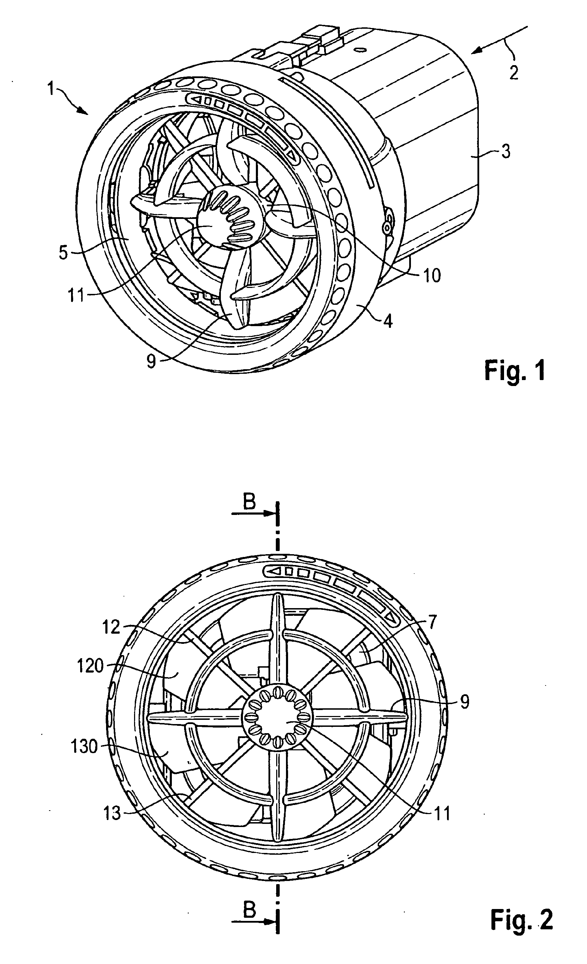

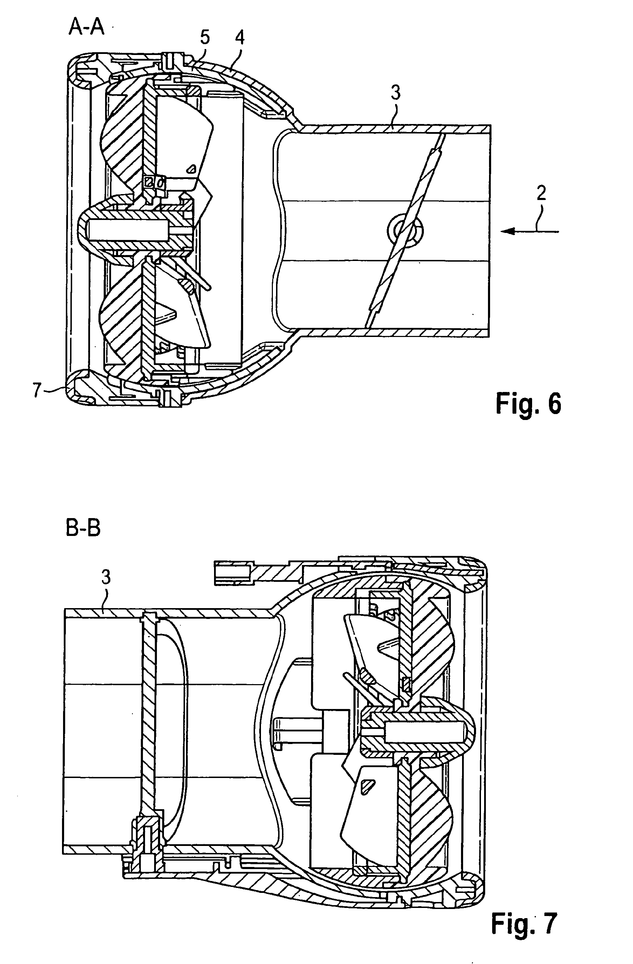

Die Figuren 1, 5, 6 und 7 zeigen einen Luftausströmer 1 mit einem Luftführungskanal 3. Im Bereich des Luftaustritts in den Fahrzeuginnenraum befindet sich eine Dralleinrichtung 5, mit deren Hilfe der austretende Luftstrom 2 je nach Wunsch von einer gerichteten Strömung (Spot- oder direkte Luftströmung) bis zu einer Drall behafteten, diffusen Luftströmung, eingestellt werden kann.

Die Dralleinrichtung 5 kann zusätzlich innerhalb des Luftführungskanals 3 verschwenkbar angeordnet sein, so dass der austretende Luftstrom in den Fahrzeuginnenraum noch in eine gewünschte Richtung eingestellt werden kann, was insbesondere im Falle einer gerichteten Strömungseinstellung wünschenswert ist.

Die Dralleinrichtung 5 ist in eine kugelförmige Erweiterung 4 der Wand des Luftführungskanals 3, in Richtung des Luftstromes 2 zum Fahrzeuginnenraum hin gerichtet, eingebracht. Die perspektivische Darstellung der Figur 1 lässt die Dralleinrichtung 5 von vorne, von der Fahrzeugseite aus in Richtung gegen den Luftstrom 2 gesehen, erkennen. Figur 2 zeigt die senkrechte Ansicht auf die Dralleinrichtung gegen den Luftstrom 2 gesehen.

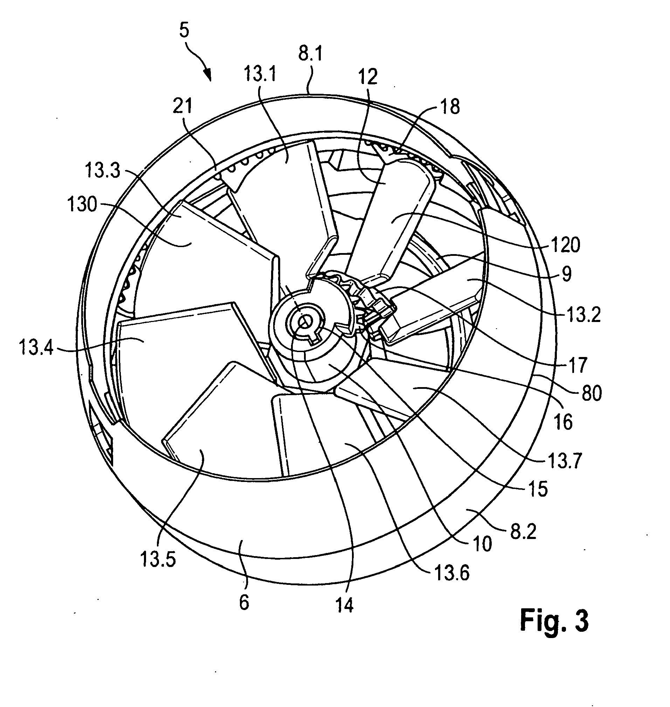

Die Dralleinrichtung 5 weist eine zentrische Nabe 10 auf, die über eine Tragekonstruktion 9 mit dem Gehäuse der Dralleinrichtung 5 verbunden ist und von diesem in Position gehalten wird. Das Gehäuse besteht, wie aus Figur 3 ersichtlich, aus einem oberen Gehäuseteil 8.1 und einem unteren Gehäuseteil 8.2, das mit der Tragekonstruktion 9 verbunden ist. In der Richtung des Luftstroms 2 gesehen, befindet sich das obere Gehäuseteil 8.1 vor dem unteren Gehäuseteil 8.2. Die Tragekonstruktion 9, die Nabe 10 und das Gehäuseteil 8.1 bilden ein einstückiges Kunststoff-Spritzgussteil.

In einer Nut der Gehäusewand 6 der Dralleinrichtung 5, genauer gesagt im Bereich der Trennfuge 80 zwischen den Gehäuseteilen 8.1, 8.2, ist ein Zahnkranz 21 drehbar um eine (später beschriebene) Verstellachse 14 als virtuelle Drehachse eingefügt.

Radial ausgehend von der Nabe 10 erstrecken sich ein erstes Luftleitelement 12 und mehrere zweite Luftleitelemente 13, die paddel- oder schaufelartig ausgebildet und mit einem inneren Ende drehbar in der Nabe 10 gehalten sind und mit einem äußeren Ende drehbar mit dem Zahnkranz 21 zusammenwirken, wie nachfolgend noch erläutert wird. Die Luftleitelemente 12, 13 sind in ihrer Neigung gegenüber dem Luftstrom 2 durch den Luftausströmer 1 verstellbar. Durch die Neigungsverstellung wird ein gewünschter Drallgrad der Luftströmung 2 erzeugt. Stehen die Luftleitelemente 12, 13 mit Ihren Flächen 120, 130 parallel zu der Luftströmung 2, so wird die Luftaustrittsfläche 7 der Dralleinrichtung 5 maximal für den durchströmenden Luftstrom 2 freigegeben. Ein Neigen der Flächen 120, 130 gegen die Richtung des Luftstromes 2 führt zu zumindest teilweiser Umlenkung des Luftstromes und damit zur Erzeugung eines gewünschten Dralls. Figur 2 zeigt die Luftleitelemente 12, 13 in einer Stellung mit etwa 45° Neigung zur Richtung des Luftstromes 2.

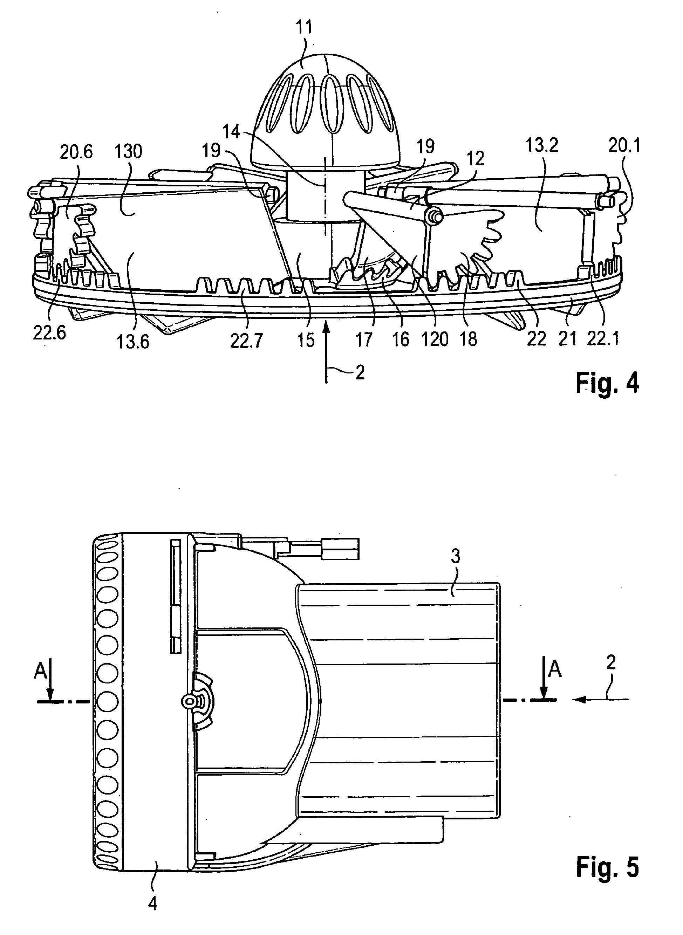

Die Figuren 3 und 4 zeigen die Lagerung der Luftleitelemente 12, 13. Insbesondere Figur 4, in der die Dralleinrichtung 5 ohne Gehäuse dargestellt ist, verdeutlicht den Antrieb zur Verstellung der Neigung der Flächen 120, 130 der Luftleitelemente 12, 13. Die Neigung beträgt in der Darstellung der Figur 3 etwa 45° zur Richtung des Luftstromes 2, was gleichbedeutend ist mit der Richtung einer geometrischen Normalen zur Ebene, die durch den Zahnkranz 21 definiert ist bzw. auch gleichbedeutend zur Normalen der Luftaustrittsfläche 7.

Axial durch die Nabe 10 erstreckt sich eine Verstellachse 14, die auf ihrem dem Fahrzeuginnenraum zugewandten Ende das Betätigungselement 11 trägt. Am gegenüberliegenden inneren Ende 15 der Verstellachse 14 befindet sich ein Zahnsegment 16, wie aus den Figuren 3 und 4 ersichtlich ist. Das erste Luftleitelement 12 ist mit Zahnsegmenten 17 und 18 fest verbunden. Bevorzugt sind die Zahnsegmente 17 und 18 einstückig mit dem ersten Luftleitelement 12 in einem Kunststoff-Spritzgussverfahren hergestellt.

Das Zahnsegment 16 der Verstellachse 14 wirkt mit dem inneren, der Nabe 10 zugewandten Zahnsegment 17 des ersten Luftleitelements 12 zusammen. Das äußere Zahnsegment 18 des ersten Luftleitelements 12 greift in ein Zahnsegment 22 des Zahnkranzes 21 ein und wirkt mit diesem zusammen. Das erste Luftleitelement 12 und genauso die zweiten Luftleitelemente 13 tragen auf ihrem der Nabe 10 zugewandten Ende jeweils einen Achsstummel 19, der drehbar in die Nabe 10 eingesteckt ist, wie aus Figur 4 hervorgeht (in Figur 4 ist die Nabe 10 aus Gründen der Übersichtlichkeit und um die Verstellachse 14 zu zeigen weggelassen.)

In der hier gezeigten Ausführungsform sind insgesamt 8 Luftleitelemente - ein erstes Luftleitelement 12 und sieben zweite Luftleitelemente 13.1 bis 13.7 - in die Dralleinrichtung 5 eingebaut. Wie sich für den Fachmann leicht erschließt, kann diese Anzahl entsprechend der Randbedingungen wie etwa Größe der Luftaustrittsfläche 7, gewünschter Raum zwischen den Luftleitelementen, Stärke des Dralls, maximal möglicher Verstellwinkel der Luftleitelemente variiert werden.

Wie aus Figur 4 weiterhin ersichtlich ist, tragen die zweiten Luftleitelemente 13 ebenfalls an ihrem äußeren, dem Zahnkranz 21 zugewandten Ende jeweils ein Zahnsegment 20. Die zweiten Luftleitelemente 13 können auf die gleiche Weise hergestellt sein wie das erste Luftleitelement 12.

Die Zahnsegmente 20 der zweiten Luftleitelemente 13 greifen, analog der Darstellung des ersten Luftleitelements 12, ebenfalls in die Zahnsegmente 22 des Zahnkranzes 21 ein und wirken mit diesen zusammen. Der Zahnkranz 21 kann hierfür, wie in Figur 4 dargestellt, kurze, den einzelnen Zahnsegmenten 18, 20 der Luftleitelemente 12, 13 zugeordnete Zahnsegmente 22 aufweisen oder als Zahnkranz mit einer durchgängig umlaufenden Verzahnung gebildet sein.

Wird die Verstellachse 14 über das Betätigungselement 11 um einen gewünschten und zulässigen Drehwinkel verdreht, so wird über das Zusammenwirken der Zahnsegmente 16 und 17 die Drehbewegung auf das erste Luftleitelement 12 übertragen. Dieses wird um einen, der Übersetzung der zusammenwirkenden Zahnsegmente 16 und 17 entsprechenden Winkel gegenüber der Richtung es Luftstromes 2 ebenfalls verdreht. Die Übersetzung der Zahnsegmente 16 und 17, genauso wie auch die der Zahnsegmente 18, 20 und 22, ist typischerweise 1, kann aber auch davon abweichen, um z. B. durch einen größeren zulässigen Drehwinkelbereich der Verstellachse 14 gegenüber dem Neigungswinkel der ersten und zweiten Luftleitelemente 12, 13 ein feineres Einstellen dieses Neigungswinkels zu ermöglichen.

Über das Zahnsegment 18 des ersten Luftleitelements 12 und dessen Zusammenwirken mit dem Zahnsegment 22 wird die Verstellung auf den Zahnkranz 21 übertragen und damit über das Zusammenwirken der weiteren Zahnsegmente 22.1 bis 22.7 mit den Zahnsegmenten 20.1 bis 20.7 der zweiten Luftleitelemente 13.1 bis 13.7 auf diese übertragen. Die Bewegung des ersten Luftleitelements 12 und die Bewegung der zweiten Luftleitelemente 13.1 bis 13.7 sind somit synchronisiert. (In Figur 4 ist aus Gründen der Übersichtlichkeit das Luftleitelement 13.7 nicht dargestellt.)

Bevorzugt sind die Zahnsegmente 18, 20 als gezahnte Viertelkreise gebildet, d. h. der Öffnungswinkel der Schenkel der Zahnsegmente beträgt etwa 45°. Abhängig vom gewünschten Verstellwinkel der Luftleitelemente 12, 13 können die Zahnsegmente 18, 20 größer bzw. kleiner sein. Im dargestellten Ausführungsbeispiel können die Luftleitelemente 12, 13 durch die Verstellachse 14 sowohl im als auch gegen den Uhrzeigersinn verdreht werden. Der maximale Verstellwinkel beträgt hierbei 45° in jede Richtung entsprechend der Ausbildung der Zahnsegmente 18, 20 als Viertelkreise.

Nicht eingezeichnet, aber für den Fachmann leicht ersichtlich, ist das Einbringen von Anschlägen zur Begrenzung des Drehwinkels. Hierbei kann es sich z. B. um mindestens einen hervorstehende Nocken an einem Ende der Zahnsegmente 22 handeln, der ein Weiterdrehen der Zahnsegmente 18 bzw. 20 durch Zusammenwirken mit mindestens einem entsprechenden Gegennocken am Zahnsegment 18 bzw. 20 verhindert. In diesem Fall müsste beim Ausführungsbeispiel der Öffnungswinkel der Zahnsegmente 18, 20 nur etwa halb so groß sein, d. h. Achtelkreise wären ausreichend. Entsprechend kann dies auch im Zusammenwirken der Zahnsegmente 16 und 17 realisiert werden.

Prinzipiell können die Luftleitelemente 12, 13 auch so weit verdreht werden, dass sie sich überlappen und die Luftaustrittsöffnung nahezu verschließen. Beliebige Zwischenstellungen und damit unterschiedliche Dralleinstellungen, sind möglich.

Alternativ zur manuellen Verstellung kann auch ein Stellantrieb an die Verstellachse 14 angeflanscht werden, bevorzugt auf deren dem Luftstrom zugewandten Ende.

Wie bereits erwähnt können die Nabe 10, die Tragekonstruktion 9 und zumindest ein Teil des Gehäuses der Dralleinrichtung 5 kostengünstig aus Kunststoff in einem Spritzgussverfahren einstückig hergestellt werden. Die Luftleitelemente 12, 13 mit den integrierten Zahnsegmenten 17, 18, 20 und/oder dem Achsstummel 19 sind ebenfalls in einem einfachen Kunststoff-Spritzgussverfahren preiswert einstückig herstellbar, genauso wie die Verstellachse 14 mit dem einstückig angespritztem Betätigungselement 11 und dem aufsteckbaren Zahnsegment 16. Alternativ kann das Zahnsegment 16 auch einstückig an die Verstellachse 14 angespritzt und bei der Montage das Betätigungselement 11 auf dem gegenüberliegenden Ende der Verstellachse 14 aufgesteckt werden. Der Zahnkranz 21 kann ebenfalls ein einfaches Kunststoff-Spritzgussteil sein.

Der Zusammenbau der Dralleinrichtung 5 erfolgt durch einfache Steckmontage der Einzelteile.

## Patentansprüche

1. Dralleinrichtung für einen Luftausströmer, mit
einer Nabe (10),
einer Verstellachse (14),
einem in der Nabe (10) drehbar gelagerten und sich von der Nabe (10) radial erstreckenden ersten Luftleitelement (12), das durch Drehen der Verstellachse (14) verstellbar ist,
wenigstens einem in der Nabe (10) drehbar gelagerten und sich von der Nabe (10) radial erstreckenden zweiten Luftleitelement (13),
wobei das erste Luftleitelement (12) ein weiteres Zahnsegment (17) aufweist, das in ein an die Verstellachse (14) gekoppeltes Zahnsegment (16) eingreift und mit diesem zusammenwirkt,
**dadurch gekennzeichnet, dass**
das erste Luftleitelement (12) an seinem der Nabe (10) abgewandten Ende ein Zahnsegment (18) aufweist, das in ein Zahnsegment (22) eines um die Verstellachse (14) drehbaren Zahnkranzes (21) eingreift und mit diesem zusammenwirkt,
das zweite Luftleitelement (13) an seinem der Nabe (10) abgewandten Ende ein Zahnsegment (20) aufweist, das ebenfalls in ein Zahnsegment (22) des Zahnkranzes (21) eingreift und mit diesem zusammenwirkt.

2. Dralleinrichtung nach Anspruch 1, **dadurch gekennzeichnet, dass** die Zahnsegmente (17, 18, 20) fest mit den jeweiligen Luftleitelementen (12, 13) verbunden sind und vorzugsweise einstückig mit diesen ausgebildet sind.

3. Dralleinrichtung nach Anspruch 1 oder 2, **dadurch gekennzeichnet, dass** die Nabe (10) über eine Tragekonstruktion (9) mit einem Gehäuse der Dralleinrichtung verbunden ist und von diesem in Position gehalten wird.

4. Dralleinrichtung nach einem der vorhergehenden Ansprüche, **dadurch gekennzeichnet, dass** der Zahnkranz (21) in eine Nut einer Gehäusewand (6) der Dralleinrichtung 5 eingefügt ist.

5. Dralleinrichtung nach einem der vorhergehenden Ansprüche, **dadurch gekennzeichnet, dass** sich die Verstellachse (14) axial durch die Nabe (10) erstreckt und auf eine Ende ein Betätigungselement (11) trägt, das vorzugsweise einstückig mit der Verstellachse (14) ausgebildet ist.

6. Dralleinrichtung nach einem der vorhergehenden Ansprüche, **dadurch gekennzeichnet, dass** die Luftleitelemente (12, 13) an ihrem der Nabe (10) zugewandten Ende jeweils einen Achsstummel (19) aufweisen, der drehbar in die Nabe (10) eingesteckt ist.

7. Dralleinrichtung nach einem der vorhergehenden Ansprüche, **dadurch gekennzeichnet, dass** ein erstes Luftleitelement (12) und eine Mehrzahl zweiter Luftleitelemente (13.1, ... 13.7) vorgesehen sind.

8. Dralleinrichtung nach einem der vorhergehenden Ansprüche, **dadurch gekennzeichnet, dass** der Zahnkranz (21) in Umfangsrichtung voneinander beabstandete Zahnsegmente (22) aufweist.

9. Dralleinrichtung nach einem der Ansprüche 1 bis 7, **dadurch gekennzeichnet, dass** die Zahnsegmente (22) Teil einer in Umfangsrichtung durchgängigen Verzahnung sind.

10. Dralleinrichtung nach einem der vorhergehenden Ansprüche, **dadurch gekennzeichnet, dass** der Öffnungswinkel der Schenkel der Zahnsegmente (18, 20) etwa 45° beträgt.

11. Luftausströmer, insbesondere für den Innenraum eines Kraftfahrzeugs, mit einer Dralleinrichtung (5) nach einem der vorhergehenden Ansprüche, **dadurch gekennzeichnet, dass** der Luftausströmer einen Luftführungskanal (3) mit einer Erweiterung (4) aufweist, in die die Dralleinrichtung (5) eingesetzt ist.

## Claims

1. A swirl device for an air vent, comprising
a hub (10),
an adjusting spindle (14),
a first air guide member (12) which is mounted for rotation in the hub (10) and extends radially from the hub (10) and which is adjustable by rotating the adjusting spindle (14),
at least one second air guide member (13) which is mounted for rotation in the hub (10) and extends radially from the hub (10),
the first air guide member (12) including a further toothed segment (17) which engages into and cooperates with a toothed segment (16) coupled to the adjusting spindle (14),
**characterized in that**
at its end facing away from the hub (10), the first air guide member (12) includes a toothed segment (18) which engages into and cooperates with a toothed segment (22) of a toothed ring (21) that is rotatable about the adjusting spindle (14),
at its end facing away from the hub (10), the second air guide member (13) includes a toothed segment (20) which likewise engages into and cooperates with a toothed segment (22) of the toothed ring (21).

2. The swirl device according to claim 1, **characterized in that** the toothed segments (17, 18, 20) are firmly connected with the respective air guide members (12, 13) and are preferably formed in one piece therewith.

3. The swirl device according to claim 1 or 2, **characterized in that** the hub (10) is connected with a housing of the swirl device by a support structure (9) and is held in position by the housing.

4. The swirl device according to any of the preceding claims, **characterized in that** the toothed ring (21) is inserted in a groove of a housing wall (6) of the swirl device (5).

5. The swirl device according to any of the preceding claims, **characterized in that** the adjusting spindle (14) extends axially through the hub (10) and has an end carrying an actuating member (11) which is preferably formed in one piece with the adjusting spindle (14).

6. The swirl device according to any of the preceding claims, **characterized in that** at their respective end facing the hub (10), the air guide members (12, 13) each include a stub shaft (19) which is inserted for rotation into the hub (10).

7. The swirl device according to any of the preceding claims, **characterized in that** a first air guide member (12) and a plurality of second air guide members (13.1, ... 13.7) are provided.

8. The swirl device according to any of the preceding claims, **characterized in that** the toothed ring (21) includes toothed segments (22) that are spaced apart from one another in the peripheral direction.

9. The swirl device according to any of claims 1 to 7, **characterized in that** the toothed segments (22) are part of a toothing that is continuous in the peripheral direction.

10. The swirl device according to any of the preceding claims, **characterized in that** the opening angle of the legs of the toothed segments (18, 20) amounts to approx. 45 degrees.

11. An air vent, in particular for a motor vehicle interior, comprising a swirl device (5) according to any of the preceding claims, **characterized in that** the air vent includes an air duct (3) having a widened portion (4) into which the swirl device (5) is inserted.

## Revendications

1. Dispositif giratoire pour un diffuseur d'air, comportant
un moyeu (10),
un axe de déplacement (14),
un premier élément de guidage d'air (12) monté en rotation dans le moyeu (10) et s'étendant radialement à partir du moyeu (10), qui est déplaçable par rotation de l'axe de déplacement (14),
au moins un second élément de guidage d'air (13) monté en rotation dans le moyeu (10) et s'étendant radialement à partir du moyeu (10),
dans lequel
le premier élément de guidage d'air (12) comprend un autre segment denté (17) qui vient s'engager dans un segment denté (16) couplé à l'axe de déplacement (14) et qui coopère avec celui-ci,
**caractérisé en ce que**
le premier élément de guidage d'air (12) comprend à son extrémité détournée du moyeu (10) un segment denté (18) qui vient s'engager dans un segment denté (22) d'une couronne dentée (21) mobile en rotation autour de l'axe de déplacement (14) et qui coopère avec celui-ci,
le second élément de guidage d'air (13) comprend à son extrémité détournée du moyeu (10) un segment denté (20) qui vient également s'engager dans un segment denté (22) de la couronne dentée (21) et qui coopère avec celui-ci.

2. Dispositif giratoire selon la revendication 1, **caractérisé en ce que** les segments dentés (17, 18, 20) sont solidaires des éléments de guidage d'air (12, 13) respectifs et réalisés de préférence d'un seul tenant avec ceux-ci.

3. Dispositif giratoire selon la revendication 1 ou 2, **caractérisé en ce qu'**au moyen d'une construction de support (9), le moyeu (10) est relié à un boîtier du dispositif giratoire et est maintenu en position par celui-ci.

4. Dispositif giratoire selon l'une des revendications précédentes, **caractérisé en ce que** la couronne dentée (21) est introduite dans une rainure d'une paroi de boîtier (6) du dispositif giratoire 5.

5. Dispositif giratoire selon l'une des revendications précédentes, **caractérisé en ce que** l'axe de déplacement (14) s'étend axialement à travers le moyeu (10) et porte à une extrémité un élément d'actionnement (11) qui est réalisé de préférence d'un seul tenant avec l'axe de déplacement (14).

6. Dispositif giratoire selon l'une des revendications précédentes, **caractérisé en ce que** les éléments de guidage d'air (12, 13) présentent à leur extrémité tournée vers le moyeu (10) chacun un tronc d'axe (19) qui est enfiché de façon mobile en rotation dans le moyeu (10).

7. Dispositif giratoire selon l'une des revendications précédentes, **caractérisé en ce que en ce qu'**il est prévu un premier élément de guidage d'air (12) et une pluralité de seconds éléments de guidage d'air (13.1, ... 13.7).

8. Dispositif giratoire selon l'une des revendications précédentes, **caractérisé en ce que** la couronne dentée (21) comprend des segments dentés (22) espacés les uns des autres en direction périphérique.

9. Dispositif giratoire selon l'une des revendications 1 à 7, **caractérisé en ce que** les segments dentés (22) font partie d'une denture continue en direction périphérique.

10. Dispositif giratoire selon l'une des revendications précédentes, **caractérisé en ce que** l'angle d'ouverture des branches des segments dentés (18, 20) s'élève à environ 45°.

11. Diffuseur d'air, en particulier pour l'habitacle d'un véhicule automobile, comportant un dispositif giratoire (5) selon l'une des revendications précédentes, **caractérisé en ce que** le diffuseur d'air présente un canal de guidage d'air (3) pourvu d'un élargissement (4) dans lequel est mis en place le dispositif giratoire (5).
